# EUROPEAN PATENT SPECIFICATION

(11) **EP 2 484 219 B1**
(45) Date of publication and mention of the grant of the patent: **06.04.2016**
(21) Application number: 12153241.0
(22) Date of filing: 31.01.2012
(51) Int. Cl.: A23G 1/32, A23G 1/42, A23L 27/23

(54) **Agents for improving the taste and flavor of chocolate**
Wirkstoffe zum Verbessern des Geschmacks und Aromas von Schokolade
Agents pour améliorer le goût et la saveur du chocolat

(30) Priority: 04.02.2011 JP 2011023350; 02.06.2011 JP 2011124247
(43) Date of publication of application: 08.08.2012
(73) Proprietor: TableMark Co., Ltd., Tokyo 104-0045 (JP)
(72) Inventor: TANIZAWA, Junko, Ota-ku, Tokyo 144-0042 (JP); SANO, Hiroyuki, Ota-ku, Tokyo 144-0042 (JP); TAKANO, Yasuko, Ota-ku, Tokyo 144-0042 (JP)
(74) Representative: Isarpatent

(56) References cited:
- EP-A1- 1 080 645
- WO-A1-2005/013723
- WO-A1-2009/007717
- WO-A2-2009/013240
- FR-A- 537 330
- FR-A- 960 521
- FR-A- 1 120 199
- FR-A- 1 271 134
- US-B1- 6 344 231
- ANONYMOUS: "Product Name Super YE", ANNOUNCEMENT AJINOMOTO, XX, XX, 1 December 2002 (2002-12-01), page 1, XP002299362,
- FUJIMAKI MASAO: "Flavor-improving effects of glutamic acid and inosine monophosphate", SYMPOSIUM INTERNATIONAL DE LA C.I.I.A / COMMISSIONINTERNATIONALE DES INDUSTRIES AGRICOLES ET ALIMENTAIRES, X, XX, 1 January 1974 (1974-01-01), pages 102-116, XP009089576,
- KRITIKA MAHADEVAN ET AL: "Key Odor Impact Compounds in Three Yeast Extract Pastes", JOURNAL OF AGRICULTURAL AND FOOD CHEMISTRY, vol. 54, no. 19, 1 September 2006 (2006-09-01), pages 7242-7250, XP55030131, ISSN: 0021-8561, DOI: 10.1021/jf061102x
- COMUZZO ET AL: "Yeast derivatives (extracts and autolysates) in winemaking: Release of volatile compounds and effects on wine aroma volatility", FOOD CHEMISTRY, ELSEVIER LTD, NL, vol. 99, no. 2, 1 January 2006 (2006-01-01), pages 217-230, XP005424633, ISSN: 0308-8146, DOI: 10.1016/J.FOODCHEM.2005.06.049
- HENRY V. IZZO ET AL: "Isolation and identification of the volatile components of an extruded autolyzed yeast extract", JOURNAL OF AGRICULTURAL AND FOOD CHEMISTRY, vol. 39, no. 12, 1 December 1991 (1991-12-01), pages 2245-2248, XP55030133, ISSN: 0021-8561, DOI: 10.1021/jf00012a029

## Description

The present invention relates to the use of yeast extracts in foods and beverages that contain chocolate. The present invention also relates to an improvement in the taste and flavor of foods and beverages that contain chocolate. The present invention is useful in the field of manufacturing foods or beverages.

Yeast extracts are used in various foods as a seasoning derived from natural substances. Since yeast extracts contain fairly large amounts of the *umami* component glutamic acid. they are primarily used to complement *umami* (Patent Documents 1 to 3); in recent years, however, studies are also being made in expectation of an effect that glutamic acid might have on tastes other than *umami.*

For example, Patent Document 4 proposes a sweetness improving agent that contains a yeast extract as the active ingredient, based on the finding that a yeast extract, especially one that contains sodium 5'-inosinate and/or sodium 5'-adenylate, as well as sodium 5'-guanylate, sodium 5'-uridylate, and sodium 5'-cytidylate in respective amounts of 1-15%, and sodium glutamate in an amount of 1-20% improves sweetness characteristics, in particular, an aftertaste characteristic. Patent Document 5 proposes a method for enhancing the sweetness and body of foods characterized by using a yeast extract having a free amino acids content of at least 5 wt%, based on the finding that when a yeast extract containing free amino acids at specified proportions was added as an ingredient, the sweetness and body of sweet-tasting foods could be enhanced in a simple and economical way.

Chocolate is used in many foods and beverages and its eating quality is well known and attracting people all over the world. As regards chocolate, a study of flavor volatiles has been reported and another study has been reported on the aroma of milk chocolate and cacao mass (Non-Patent Documents 1 and 2). In industrial manufacture of chocolate products, additives such as flavorings, saccharides, lipids and sweeteners are sometimes incorporated in the ingredient cacao content for various purposes such as reduced costs of the starting materials for production and improvements in the taste and flavor of the product. For example, Patent Document 6 proposes imparting a milk chocolate flavor to a confectionary composition having chocolate characteristics by using a mixture of pure flavor compounds containing at least one short-chain fatty acid and at least one lactone.
Patent Document 1: JP 2005-102549 A
Patent Document 2: JP Hei 10-327802 A
Patent Document 3: WO 99/16860
Patent Document 4: JP 2000-37170 A (Patent No. 3088709)
Paten Document 5: JP 2009-44978 A
Paten Document 6: JP 2001-95490 A
Patent Document 7: WO 2009/007717 A1
Patent Document 8: WO 2009/013240 A2

Non-Patent Document 1: Food Chemistry, 113, 208-215, 2009
Non-Patent Document 2: J. Agric. Food Chem., Vol. 45, No. 3, 867-872, 1997
Non-Patent Document 3: "Product Name Super YE", ANNOUNCEMENT AJINOMOTO 2002
Non-Patent Document 4: J. Agric. Food Chem., 2006, Vol. 54, 7242-7250

In the study on the use of yeast extracts having various characteristics in a variety of foods, the present inventors have found that a yeast extract that is rich in glutamic acid and which also contains large amounts of nucleic acids is effective in enhancing the initial taste of the product which is mainly composed of umami. They have also found that the yeast extract is sufficiently compatible with dairy products to increase their milk feel and that, quite unexpectedly, it makes the eating quality of chocolate more pronounced; the present invention has been accomplished on the basis of these findings.

The present invention provides the following:
[1] An agent for improving the eating quality of chocolate products, which comprises as active ingredients the taste components and/or aroma components of a yeast extract comprising: (a) at least 10 wt% (preferably at least 15%) of sodium glutamate; (b) at least 1 wt% (preferably at least 1.5 wit%) in total of sodium inosinate and sodium guanylate; and (c) 2-furanmethanol and/or 5-methyl-2-furanmethanol. [2] An agent for improving the eating quality of chocolate products, which comprises as an active ingredient a yeast extract comprising: (a) at least 10 wt % (preferably at least 15%) of sodium glutamate; (b) at least 1 wt% (preferably at least 1.5 wt%) in total of sodium inosinate and sodium guanylate; and (c) 2-furanmethanol and/or 5-methyl-2-furanmethanol. [3] A method of improving the eating quality of chocolate products, which comprises the step of adding a yeast extract comprising: (a) at least 10 wt% (preferably at least 15%) of sodium glutamate; (b) at least 1 wt% (preferably at least 1.5 wit%) in total of sodium inosinate and sodium guanylate; and (c) 2-furanmethanol and/or 5-methyl-2-furanmethanol. [4] The method as recited in [3], wherein the yeast extract is added in an amount of at least 0.002% (preferably at least 0.01%) but not more than 0.13% (preferably not more than 0.075%) per unit weight of the product. [5] A chocolate product comprising (1) cacao, (2) milk fat, (3) a sweetener, and (4) a yeast
   extract comprising:
   (a) at least 10 wt% (preferably at least 15%) of sodium glutamate;
   (b) at least 1 wt% (preferably at least 1.5 wt%) in total of sodium inosinate and sodium guanylate; and
   (c) 2-furanmethanol and/or 5-methyl-2-furanmethanol,
   further characterized in that the product contains
   (a) at least 0.00010 wt% of sodium glutamate; and
   (b) at least 0.000010 wt% in total of sodium inosinate and sodium guanylate.
[6] A chocolate product comprising (1) cacao, (2) milk fat, (3) a sweetener, (4) a yeast extract, and (5) 5-methyl-2-furanmethanol.
[7] The chocolate product as recited in [5] or [6] which is milk chocolate containing at least 21 wt% of cacao.
[8] The chocolate product as recited in [5] or [6] which is white chocolate containing at least 18 wt% of cocoa butter.
[9] The chocolate product as recited in [5] or [6] which is a chocolate drink containing at least 7 wt% of cacao.
[10] An agent for improving the eating quality of chocolate products, which comprises 5-methyl-2-furanmethanol.

FIG. 1 is a typical chart showing the result of GC/MS analysis of the aroma components in the invention product.

FIG. 2 compares the result of analyzing the aroma components in the invention product with those of analysis of commercial yeast extracts that produce a strong perceivable smell of livestock animal meat.

The present invention relates to the use of yeast extracts in chocolate products.

Unless otherwise noted, the term "eating quality" as used herein refers to those elements of characteristics relating to the palatability of foods which are perceived by the taste sense and/or olfactory sense and it specifically refers to taste, flavor, and aroma.

Unless otherwise noted, the term "agent" as used herein refers to a substance that is to be added to chocolate products being manufactured. The agent of the present invention may be a yeast extract per se or it may be a composition comprising the yeast extract and a carrier and/or an additive that are acceptable for use in foods.

Unless otherwise noted, the values indicated herein as relating to the contents or recipes of amino acids and other ingredients in connection with the agent, yeast extract, chocolate composition, etc. are based on weight.

### [Yeast extract]

Unless otherwise noted, the term "yeast extract" as used herein refers to an extract obtained from a yeast cell by extraction with a solvent. A purified, concentrated, or dried product of the extract is also encompassed by the term "yeast extract." The yeast extract may be in a liquid or paste form, or even in a powder form.

The yeast extract to be used in the present invention contains taste components and aroma components.

Unless otherwise noted, the term "taste components" as used herein in connection with the yeast extract refers to those components in the yeast extract which are perceived by the taste sense (in the mouth or on the tongue) and they include not only (a) the sodium glutamate and (b) the sodium inosinate and sodium guanylate which will be described hereinbelow but also other amino acids, peptides and organic acids. The "other amino acids" include aspartic acid, alanine, and glycine. The "peptides" include ones having molecular weights of at least 100 but less than 700, at least 700 but less than 2000, at least 2000 but less than 5000, and at least 5000 but less than 10000. The "organic acids" include succinic acid, citric acid, lactic acid, pyroglutamic acid, malic acid, and acetic acid.

The term "aroma components" as used herein covers volatile, preferably water-soluble components other than those which will be described hereinbelow in the section "(c) Characteristic aroma components."

### (a) Sodium glutamate

Unless otherwise noted, the content of sodium glutamate indicated herein in connection with the yeast extract is such that the amount of glutamic acid among the free amino acids in the yeast extract is expressed as an equivalent amount of sodium glutamate monohydrate (C₅H₈NNaO₄·H₂O; molecular weight, 187.13). Sodium glutamate is sometimes called sodium 2-aminopentanedioate and may be designated as MSG (monosodium glutamate).

The yeast extract to be used in the present invention contains at least 10 wt%, preferably at least 15 wt%, more preferably at least 20 wt%, of sodium glutamate. Unless otherwise noted, the content of any component in the yeast extract that is indicated herein is based on dry weight. Unless otherwise noted, the amino acids to be contained in the yeast extract or the agent containing the yeast extract according to the present invention are amino acids of a free form and they do not include amino acid residues that constitute part of peptides or proteins. Unless otherwise noted, the amino acids are of the L-form.

### (b) Sodium inosinate and sodium gluanylate

Unless otherwise noted, the content of sodium inosinate or sodium guanylate indicated herein in connection with the yeast extract is such that the amount of inosinic acid or guanylic acid that are contained in the yeast extract is expressed as an equivalent amount of a heptahydrate of soium inosinate (C₁₀H₁₁N₄O₈P 2Na; molecular weight, 392.2) or a heptahydrate of soium guanylate (C₁₀H₁₂N₅O₈P 2Na; molecular weight, 407.2). Sodium inosinate is sometimes called disodium 5'-inosinate and may be designated as IMP·2Na. Sodium guanylat e is sometimes called disodium 5'-guanylte and may be designated as GMP·2Na. Sodium inosinate and sodium guanylate are sometimes collectively referred to as IG.

In addition to the already described sodium glutamate, the yeast extract to be used in the present invention contains sodium inosinate and sodium guanylate in a total amount of at least 1 wt%, preferably at least 1.5 wt%, more preferably at least 1.8 wt%.

### (c) Characteristic aroma components

According to the detailed study of the present inventors, the above-described yeast extract which has high sodium glutamate content as well as high contents of sodium inosinate and sodium guanylate (this yeast extract is sometimes hereinafter referred to as "the invention product") has proved to contain the following as characteristic aroma components:
(1) pyrazines (which refers to pyrazine or pyrazine derivatives having one or more substituents on the pyrazine skeleton, in particular, 2,5-dimethyl-pyrazine, 2,3-dimethyl-pyrazine, and 2-ethyl-3-methyl-pyrazine);
(2) furanmethanols (which refers to 2-furanmethanol or 2-furanmethanol derivatives having one or more substituent on the 2-furanmethanol skeleton, in particular, 2-furanmethanol and 5-methyl-2-furanmethanol); and
(3) 3-methyl-butanal (isovaleraldehyde).

Among the components listed above, 2-furanmethanol and 5-methyl-2-furanmethanol have not so far been known to be contained in yeast extracts; 2-furanmethanol (molecular weight: 98.1) is sometimes called (2-furyl)methanol, α,-furylcarbinol, 2-furylcarbinol, furan-2-methanol, 2-furanylmethanol, 2-hydroxymethylfuran or furfurylalcohol whereas 5-methyl-2-furanmethanol (molecular weight: 112.13) is sometimes called 5-methylfurfurylalcohol or 5-methylfuran-2-methanol. According to the present inventors' study, 2-furanmethanol in chocolate products is capable of imparting a sweet smell and 5-methyl-2-furanmethanol a bitter taste or flavor.

The yeast extracts that can be used in the present invention contain the following components: 2,5-dimethyl-pyrazine, 2,3-dimethyl-pyrazine and 2-ethyl-3-methyl-pyrazine in a total amount of 0.050-6.0 ppm, preferably 0.075-4.5 ppm, more preferably 0.10-3.0 ppm; 2-furanmethanol and 5-methyl-2-furanmethanol in a total amount of 0.75-24 ppm, preferably 1.5-18 ppm, more preferably 3.0-12 ppm, or 2-furanmethanol in an amount of 0.050-1.6 ppm, preferably 0.10-1.2 ppm, more preferably 0.20-0.80 ppm, and 5-methyl-2-furanmethanol in an amount of 2.0-68 ppm, preferably 4.0-51 ppm, more preferably 8.0-34 ppm; and 3-methyl-butanal in an amount of 9-270 ppm, preferably 30-180 ppm, more prefereably 60-120 ppm.

The aroma components can be identified and quantitatively determined by any skilled artisan at will using known appropriate methods. For example, GC/MS is an effective means for such identification and quantitative determination. Skilled artisans can refer to the disclosure of the Examples in the specification to know specific conditions.

### Other components

Whichever type of yeast extracts are to be used in the present invention, they preferably have high contents of free amino acids to be contained. In a preferred mode, 100 g of the yeast extract contains at least 20 g, preferably at least 25 g, more preferably at least 30 g of free amino acids. In whichever type of the yeast extracts, glutamic acid preferably accounts for higher proportions of the free amino acids contained. In a preferred mode, glutamic acid accounts for at least 40%, preferably at least 45%, more preferably at least 50% of the free amino acids contained.

Whichever type of yeast extracts are to be used in the present invention, they preferably have high contents of organic acids. In a particularly preferred mode, the yeast extract contains at least 1%, preferably at least 1.5%, more preferably at least 1.8%, of succinic acid.

### Processes for producing yeast extracts

The yeast extracts of the present invention can be produced using yeasts that are obtained by optional breeding and selection from existing, highly MSG or IG productive strains and subsequently screening strains that are highly productive of both MSG and IG.

The parent strain can be selected from among various yeasts suitable for eating. Preferred examples include yeasts of the genus *Saccharomyces* (e.g. *Saccharomyces cerebisiae, Saccharomyces rosei, Saccharomyces uvarum,* and *Saccharomyces chevalieri*) and yeasts of the genus *Candida* (e.g. *Candida utilis*).

For culturing the parent strain and variants, media that are commonly used with yeasts, such as a YPD medium and a molasses medium, can be employed. If desired, glucose, sucrose, molasses, saccharified solution, etc. can be used as carbon sources; ammonium sulfate, ammonium chloride, nitrates, urea, ammonia, etc. can be used as nitrogen sources. Furthermore, phosphoric acid, inorganic salts of potassium, magnesium, zinc, copper, manganese, iron, etc. as well as vitamins and amino acids can also be added.

When a culture is obtained, yeast cells are obtained from it by any suitable means such as centrifugal separation and, after optional washing, the cells are extracted with hot water, decomposed enzymatically and/or subjected to self-digestion, to thereby form an extract. Self-digestion is a method that depends on the action of the enzymes inherent in the yeast to solubilize it to form a yeast extract. Enzymatic decomposition is a method in which the enzyme is solubilized by an added decomposing enzyme to form a yeast extract. This method allows for adjustments in the contents of free amino acids or nucleic acids because the enzymatic reaction can be conveniently controlled by external addition of a suitable enzyme.

The enzymes to be used in enzymatic decomposition are not particularly limited as long as they are enzymes that are used to decompose components of organisms in the manufacture of foods; examples that can be used include enzymes capable of decomposing the cell walls of yeasts, proteases, nucleases, and combinations thereof. A preferred nuclease is 5'-phosphodiesterase because this is capable of increasing the contents of inosinic acid and guanylic acid in the yeast extract.

The conditions for culture and yeast extract formation can be appropriately determined by any skilled artisan.

### [Use in chocolate products]

The present invention provides agents for improving the eating quality in chocolate products.

The term "an improvement in the eating quality of chocolate products" as used herein covers an improvement in any of the four characteristics of chocolate products, i.e., chocolate's taste, sharpness of sweetness, chocolate's aroma, and chocolate's flavors (cacao feel, bitter feel, and milk feel). Whether or not any improvement has been achieved and how great the improvement is can be known through a comparative study based on sensory evaluation by one or more trained panelists. For example, two samples are provided, one being a test chocolate product containing the yeast extract to be evaluated and the other being a blank chocolate product that is identical to the test product except that it does not contain the yeast extract; panelists are asked to evaluate the improvement of the test sample over the blank on a five-point scoring scale (an increase in number corresponds to a greater improvement). For more details of the comparative study to make, reference can be made to the disclosure of the Examples in the specification.

If the invention product is added in an ineffective amount to chocolate products, effects can be brought about that are not obtainable with a sample to which only MSG is added in the corresponding effective amount, a sample to which only MSG and IG are added in the corresponding effective amount, or a sample to which the water-soluble aroma components of the invention product are added in the corresponding effective amount. More specifically, adding only MSG or adding only MSG and IG may bring about a slight improvement in the chocolate's taste but these are little effective in improving the chocolate's aroma and chocolate's flavor; on the other hand, adding only the water-soluble aroma components may bring about an improvement in the chocolate's aroma and chocolate's flavor but their effectiveness in improving the chocolate's taste and sharpness of sweetness is low; in each of these cases, no satisfactory effect is obtained. In contrast, if the invention product is added, not only satisfactory improvements are seen in the chocolate's taste, chocolate's aroma and chocolate's flavor but also a sharpness of sweetness is perceived, with the result that very preferable chocolate products can be obtained (see Example 2).

In addition, if the invention product is added to chocolate producta, an effect greater than what is obtained by using a yeast extract that has high contents of sodium inosinate and sodium guanylate but whose content of sodium glutamate is not higher than 10% (this yeast extract may be referred to as a high IG content extract) can be obtained with a smaller amount of addition (see Example 3).

Unless otherwise noted, the term "chocolate products" as used herein refers to foods and beverages that use the cacao content as an ingredient; such foods and beverages include chocolates (comprising 60-100% chocolate base, as exemplified by chocolate bar), chocolate confections (processed chocolate such as nut chocolate, puff chocolate, sugar-coated chocolate, and shell chocolate), pseudo-chocolates (comprising 60-100% pseudo-chocolate), and pseudo-chocolate confections (processed pseudo-chocolates), modified cocoa powder, cocoa, and chocolate drinks.

Unless otherwise noted, the term "cacao" as used herein refers to dehydrated cacao nibs, cacao mass, cocoa butter, cocoa cake, and cocoa powder. Cacao is roughly divided into cacao fat (cocoa butter) and non-fat cacao (e.g., cacao nibs, cacao mass, cocoa cake, and cocoa powder).

The agents of the present invention can improve not only the cacao feel but also the milk feel among the chocolate flavors; hence, they are particularly suitable for addition to milk chocolate, white chocolate, and milk-containing chocolate drinks.

Unless otherwise noted, the term "milk chocolate" as used herein refers to one form of chocolate products that has at least 21% of cacao, at least 18% of cocoa butter, at least 14% of milk solids, and at least 3% of milk fat.

Unless otherwise noted, the term "white chocolate" as used herein refers to one form of chocolate products that has at least 20% of cocoa butter, at least 14% of milk solids, at least 3.5% of milk fat, and less than 55% of a sweetener, or that contains at least 21% of cacao (at least 18% of cocoa butter), at least 14% of milk solids (at least 3.5% of milk fat), and no more than 55% of sugar (sucrose).

Unless otherwise noted, the term "chocolate drinks" as used herein as one form of chocolate products refers to chocolate-flavored beverages containing cacao and milk fat.

In the present invention, the yeast extract can be added in an amount of at least 0.002% (preferably at least 0.01%) but not more than 0.13% (preferably not more than 0.075%) per unit weight of the product.

The chocolate product of the present invention comprises (1) cacao, (2) milk fat, (3) a sweetener (e.g. sucrose, glucose, fructose, oligosaccharides, high-intensity sweetener, etc.) and (4) a yeast extract comprising:
(a) at least 10 wt% (preferably at least 15%) of sodium glutamate;
(b) at least 1 wt% (preferably at least 1.5 wt%) in total of sodium inosinate and sodium guanylate; and
(c) 2-furanmethanol and 5-methyl-2-furanmethanol,
further characterized in that the product contains
(a) at least 0.00010 wt%, preferably at least 0.0010 wt%, of sodium glutamate; and
(b) at least 0.000010 wt%, preferably at least 0.00010 wt%, in total of sodium inosinate and sodium guanylate.

In another mode, the chocolate product comprises (1) cacao, (2) milk fat, (3) a sweetener, (4) a yeast extract, and (5) 5-methyl-2-furanmethanol. The 5-methyl-2-furanmethanol as referred to herein may originate from the yeast extract or it may be added as a separate substance from the yeast extract. The yeast extract as referred to herein preferably comprises (a) at least 10 wt% (preferably at least 15%) of sodium glutamate, (b) at least 1 wt% (preferably at least 1.5 wt%) in total of sodium inosinate and sodium guanylate, and
(c) at least 8 ppm (preferably at least 11 ppm) of 2-furanmethanol and 5-methyl-2-furanmethanol. The chocolate product comprising this yeast extract contains
(a) at least 0.00010 wt%, preferably at least 0.0010 wt%, of sodium glutamate, (b) at least 0.000010 wt%, preferably at least 0.00010 wt%, in total of sodium inosinate and sodium guanylate, and an effective amount of 5-methyl-2-furanmethanol. The effective amount of 5-methyl-2-furanmethanol can be at least 0.08 ppb (as calculated on the assumption of using 0.001% of a yeast extract containing 8 pm of 5-methyl-2-furanmethanol), preferably at least 0.11 ppb (as calculated on the assumption of using 0.001% of a yeast extract containing 11 pm of 5-methyl-2-furanmethanol).

According to the present inventors' study, 5-methyl-2-furanmethanol can impart a bitter taste and flavor to chocolate products even when it is added independently. Therefore, the present invention provides chocolate products to which 5-methyl-2-furanmethanol has been added in various forms, preferably as the yeast extract. Chocolate products that are provided by the present invention contain at least 0.08 ppb, preferably at least 0.11 ppb, of 5-methyl-2-furanmethanol. In another mode, chocolate products that are provided by the present invention contain at least 0.08 ppb (preferably at least 0.11 ppb) of 5-methyl-2-furanmethanol, as well as the yeast extract.

According to the present inventors' study, an increase in the sharpness of sweetness is another effect of adding the invention product to chocolate products. Therefore, the presence of sweeteners in chocolate products is important. However, the sweetener need not be sucrose and a variety of sweeteners that are acceptable in foods and beverages can also be used in the chocolate products of the present invention. Examples of such sweeteners include sugars such as glucose, frucsoe, and oligosaccharides; sugar alcohols such as erythritol, maltitol, and xylitol; synthetic sweeteners such as sucralose, aspartame, and saccharin sodium; and natural sweeteners such as stevia, licorice, and *Siraitia grosvenorii*.

According to the present inventors' study, an increase in chocolate flavors, particularly a milk feel, is yet another effect of adding the invention product to chocolate products. On the other hand, it is known that this effect is very small or entirely absent if skim milk or flavorings are incorporated in the chocolate product. Therefore, it is considered to be important that the chocolate products to which the present invention is applied should contain milk fat.

The effective amount of the invention product to be added to chocolate products varies with the type of the latter; for milk chocolate, the effective amount is at least 0.001%, preferably at least 0.005%, more preferably at least 0.01%, and in all conceivable cases, the effective amount is not more than 0.5%, preferably not more than 0.3%, and more preferably not more than 0.2%; for white chocolate, the effective amount is at least 0.001%, preferably at least 0.005%, more preferably at least 0.01%, and in all conceivable cases, the effective amount is not more than 0.4%, preferably not more than 0.3%, and more preferably not more than 0.2%; for chocolate drinks, the effective amount is at least 0.001%, preferably at least 0.002%, more preferably at least 0.003%, and in all conceivable cases, the effective amount is not more than 0.15%, preferably not more than 0.13%, and more preferably not more than 0.075%.

The effective amount of the invention product that is common to all chocolate products is at least 0.001%, preferably at least 0.01%, and in all conceivable cases, the effective amount is preferably not more than 0.2%, and more preferably not more than 0.075%. The upper limit of the effective amount should be so determined as to avoid deleterious effects on taste *(umami* is too strong, or the characteristic taste of the yeast extract is perceived) and aroma/flavor (the characteristic aroma of the yeast extract is unpleasant.)

In the manufacture of chocolate products, the stage of addition of the yeast extract can be set appropriately and if the yeast extract is a powder, it is preferably added after it is mixed with other powdery ingredients or dispersed in lipids.

The agents of the present invention can be formulated as seasoning compositions to be added to chocolate products. Seasoning compositions permit addition of not only the yeast extract but also various additives acceptable for use in foods. Examples of such additives include dextrin, lactose, and flavorings. The addition of the seasoning composition to chocolate products can be designed in such a way that the concentration of the yeast extract during eating is within the above-noted preferred ranges of content in chocolate products. For example, the seasoning composition can be so formulated as to contain 4-40%, preferably 5-30%, more preferably 6-20%, of the yeast extract.

### [Example 1]

### [Production of yeast extract]

### (Culture of yeast)

From the library of the breadmaking yeast *Saccharomyces cerevisiae* in the possession of TableMark Co., Ltd., a seed yeast was selected with indices being the MSG and IG concentrations of the yeast extract to be obtained; the seed yeast was subjected to stirred culture and the cultured cells were separated and washed to give yeast cells.

### (Yeast extract)

The cells were treated enzymatically to obtain an extract which was heated to inactivate the enzyme and thereafter centrifuged for recovery. Following heat sterilization at 70 °C for 20 minutes and subsequent filtering through 100 mesh, the filtrate was immediately dried with a spray dryer to give a powder of yeast extract. The resulting yeast extract was found to have higher MSG and IG contents than the ordinary yeast extracts.

### (Analysis of the taste components in the yeast extract)

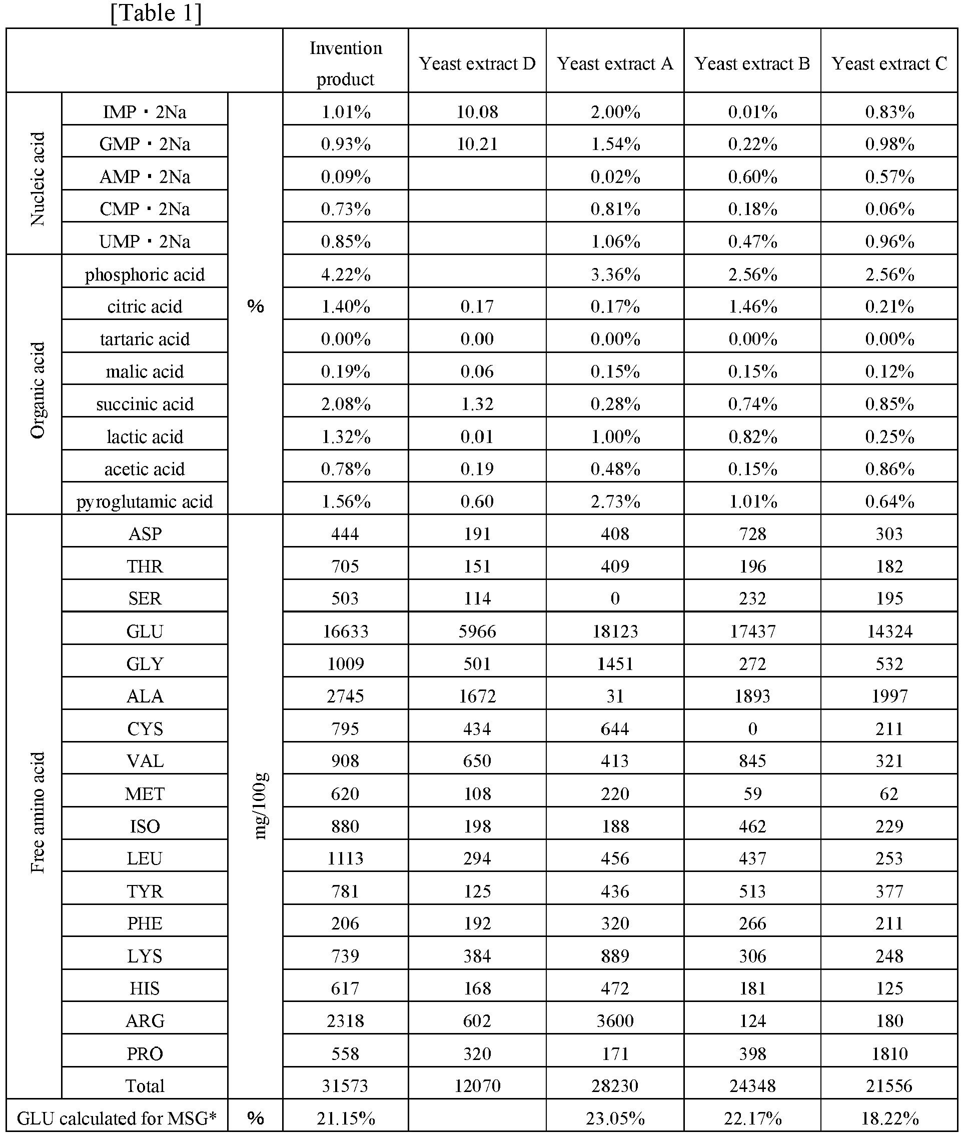

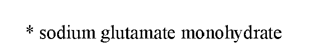

HIMAX GL (TableMark Corporation) was used as a yeast extract representative of the invention product. Comparative samples were three commercial yeast extracts, Yeast Extract A (product of Company A), Yeast Extract B (product of Company B), and Yeast Extract D (VERTEX IG-20 of TableMark Corporation). In the following Examples, unless otherwise noted, the term "the invention product" refers to HIMAX GL and Yeast Extracts A-D refer to the commercial products noted above. In Table 1, MSG refers to sodium glutamate monohydrate and unless otherwise noted, the term "MSG"as referred to in the following Examples has the same definition.

### (Analysis of the aroma components in the yeast extracts)

Using GC/MS (apparatus name: GC: VARIAN CP-3800; GC/MS: VARIAN 300-MS), the aroma components in each yeast extract were analyzed. In Example 1, unless otherwise noted, analysis was conducted under the following conditions.

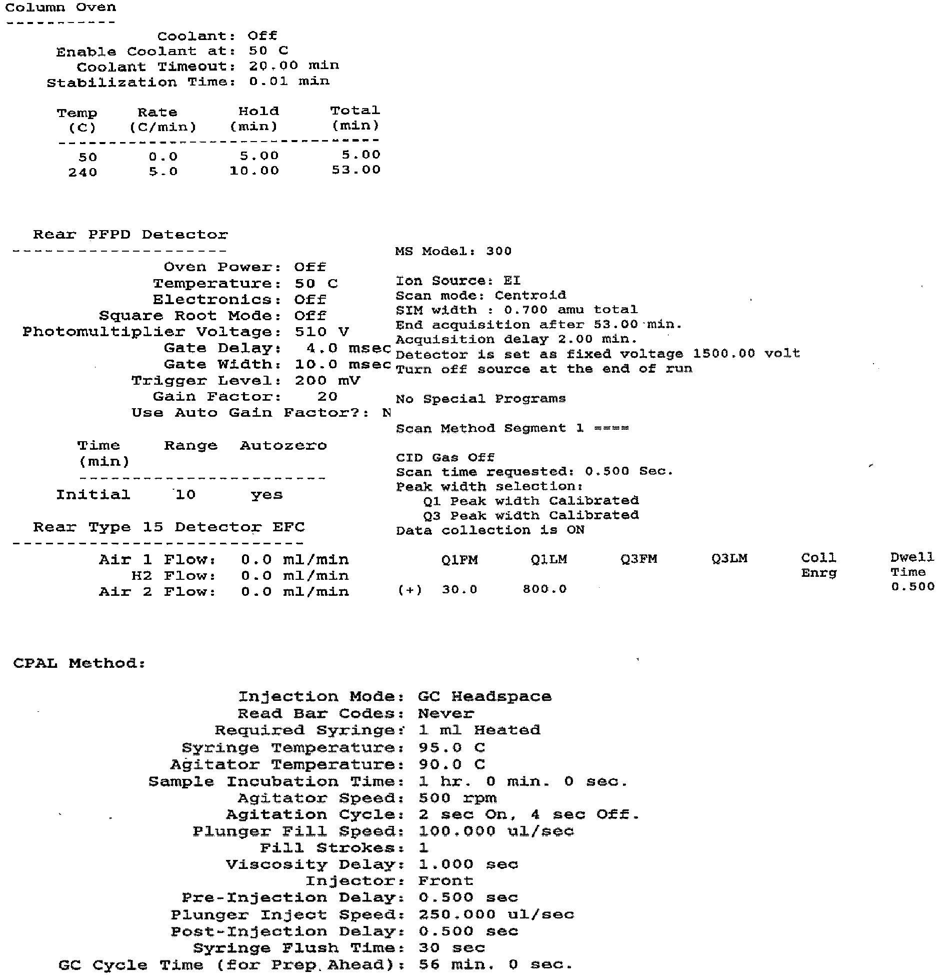

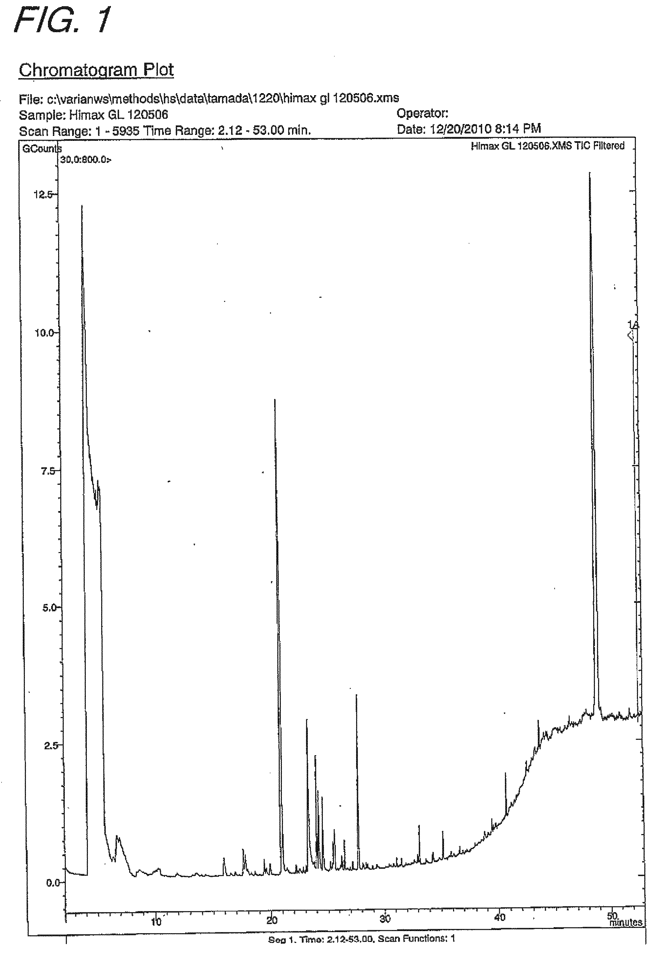

A representative chart is depicted in FIG. 1. The difference between production lots was hardly recognizable.

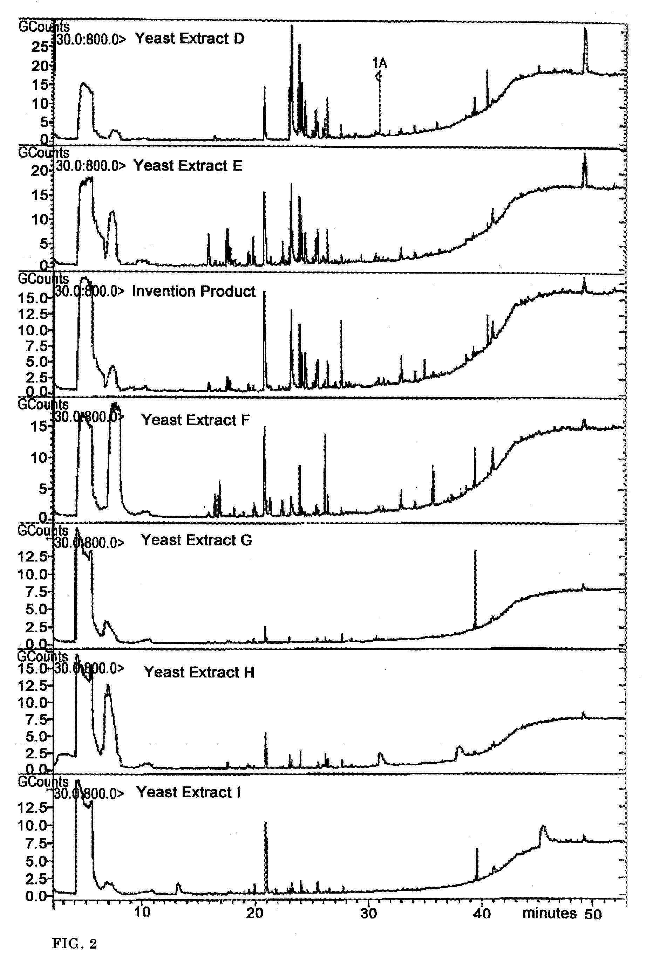

Commercial yeast extracts producing a strong perceivable smell of livestock animal meat were selected and analyzed in the same way. The results are compared in FIG. 2 with that for the invention product. In FIG. 2, Yeast Extract G refers to the result of analysis of Yeast Extract 21-TF (TableMark Corporation), Yeast Extract H to the result of analysis of Yeast Extract SF-1 (TableMark Corporation), and Yeast Extract I to the result of analysis of Yeast Extract 21-A (TableMark Corporation). Yeast Extracts G and H were in paste form whereas the others were in powder form.

On the basis of the GC/MS data, the following aroma components were identified as being characteristic of the invention product.
(1) Pyrazines (in particular, 2,5-dimethyl-pyrazine, 2,3-dimethyl-pyrazine, and 2-ethyl-3-methyl-pyrazine);
(2) Furanmethanols (in particular, 2-furanmethanol and 5-methyl-2-furanmethanol); and
(3) 3-methyl-butanal (isovaleraldehyde).

Among these components, furanmethanol and5-methyl-2-furanmethanol have not been known to be contained in yeast extracts.

These characteristic components were calculated for the concentrations at which they were contained in the yeast of Example 1 (as averaged for four lots) by means of comparison with the areas of peaks in a GC/MS chart for 1000 ppm of a commercial standard sample. The results are shown in the following table.

**[Table 2]**

| | ppm |
|---|---|
| 2,5-dimethyl-pyrazine | 1.11 |
| 2,3-dimethyl-pyrazine | 0.03 |
| 2-ethyl-3-methyl-pyrazine | 0.06 |
| 2-franmethanol | 0.35 |
| 5-methy-2-furanmethanol | 5.78 |
| 3-methyl -butanal | 74.37 |

As for 5-methyl-2-furanmethanol, the value calculated by using 2-furanmethanol as a standard sample (i.e., the value determined by means of comparison with the areas of peaks in a GC/MS chart for 1000 ppm of 2-furanmethanol was multiplied by 112.13/98.1) is shown in Table 2.

Aroma components were similarly analyzed using Yeast Extracts A and B. Among the above-noted characteristic components, two components were detected and their names and concentrations are shown in the following table.

**[Table 3]**

| Yeast Extract A | Content (ppm) |
|---|---|
| 2,5-dimethyl-pyrazine | 0.86 |
| 3-methyi-butanal | 1.26 |

| Yeast Extract B | Content (ppm) |
|---|---|
| 2,5-dimethyl-pyrazine | 0.12 |
| 3-methyi-butanal | - |

No other components were detected; specifically, 2-furanmethanol and 5-methyl-2-furanmethanol were not detected in Yeast Extract A, and 2-furanmethanol, 5-methyl-2-furanmethanol, and 3-methyl-butanal were not detected in Yeast Extract B. The detection limit was referenced to S/N = 3 which is a value generally considered to be a limit of detection by instruments.

### [Example 2]

### [Production and evaluation of chocolate products]

To evaluate the effects the taste and aroma components of the yeast extract would have on the taste and flavor of chocolate products, three product samples, i.e., milk chocolate (34.5% cacao), white chocolate, and chocolate drink (8.25% cacao, unflavored), were produced and subjected to sensory evaluation.

The invention product was used in the experiment and its aroma components are summarized in the following table.

**[Table 4]**

| | | Concentration in the yeast extract (ppm) | Concentration in the product (ppm) | |
|---|---|---|---|---|
| | | | Added as 0.05% yeast extract | Added as 0.02% yeast extract |
| a | 2,5-dimethyl-pyrazine | 1.11 | 0.00055 | 0.00022 |
| b | 2,3-dimethyl-pyrazine | 0.03 | 0.00002 | 0.00001 |
| c | 2-ethyl-3-methyl-pyrazine | 0.06 | 0.00003 | 0.00001 |
| d | 2-franmethanol | 0.35 | 0.00017 | 0.00007 |
| e | 5-methyl-2-furanmethanol | 5.78 | 0.00289 | 0.00116 |
| f | 3-methyl-butanal (isovaleraldehyde) | 74.37 | 0.03719 | 0.01487 |

### 1. Milk chocolate

Samples of milk chocolate were produced according to the recipes presented in the following table.

**[Table 5]**

| Ingredient | Blank (%) | (1) (%) | (2) (%) | (3) (%) | (4) (%) | (5) (%) | (6) (%) | (7) (%) | (8) (%) |
|---|---|---|---|---|---|---|---|---|---|
| *Milk chocolate (Cacao 36) | 97.50 | 97.50 | 97.50 | 97.50 | 97.50 | 97.500 | 97.50 | 97.50 | 97.50 |
| Salad oil | 2.50 | 2.45 | 2.45 | 2.45 | 2.49 | 2.439 | 1.95 | 1.95 | 1.95 |
| Invention product | | 0.05 | | | | 0.050 | 0.05 | 0.05 | 0.05 |
| Yeast Extract A | | | 0.05 | | | | | | |
| Yeast Extract B | | | | 0.05 | | | | | |
| MSG | | | | | 0.01 | 0.010 | | | |
| IG | | | | | | 0.001 | | | |
| Water-soluble aroma components of the invention product | | | | | | | 0.50 | | |
| Water-soluble aroma components of Yeast Extract A | | | | | | | | 0.50 | |
| Water-soluble aroma components of Yeast Extract B | | | | | | | | | 0.50 |
| Total | 100.00 | 100.00 | 100.00 | 100.00 | 100.00 | 100.000 | 100.00 | 100.00 | 100.00 |

| | | | | | | | | | |
|---|---|---|---|---|---|---|---|---|---|
| *Milk chocolate (Cacao 36) Trade name: Milk Chocolate Cacao 36 Manufactured and distributed by: Fuji Oil Co., Ltd. Ingredients: sugar, cocoa butter, whole milk powder, cacao mass, lecithin, flavorings | | | | | | | | | |

### (Production process)

The respective samples of milk chocolate were produced by the following method: the test component such as the yeast extract was dispersed in salad oil and, thereafter, chopped chocolate was added and mixed while it was dissolved with a double-boiler; the mixture was cast into a mold and cooled to solidify in a refrigerator.

### (Evaluation method)

The blank (36% cacao containing milk chocolate; product of Fuji Oil Co., Ltd.) was evaluated by six trained panelists together with the following test samples: (1) a group to which 0.05% of the invention product had been added; (2) a group to which 0.05% of Yeast Extract A had been added; (3) a group to which 0.05% Yeast Extract B had been added; (4) a group to which MSG equivalent to 0.05% of the invention product had been added (a group to which 0.001% MSG had been added); (5) a group to which MSG and IG equivalent to 0.05% of the invention product had been added (a group to which 0.001% MSG and 0.0001% IG had been added); (6) a group to which the water-soluble aroma components of the invention product as equivalent to 0.05% of the invention product had been added; (7) a group to which the water-soluble aroma components of Yeast Extract A as equivalent to 0.05% of the invention product had been added; and (8) a group to which the water-soluble aroma components of Yeast Extract B as equivalent to 0.05% of the invention product had been added. The water-soluble aroma components are the substances that are recovered in condensed water by means of a cooler after a dilution of each extract is concentrated with an evaporator.

### (Criteria for evaluation)

The items evaluated in the sensory test were the chocolate's taste and the sharpness of sweetness that were primarily perceived in the mouth on account of the taste components, as well as the chocolate's aroma and flavor that were primarily perceived in the nose on account of the aroma components, and in comparison with the blank which was evaluated (-), a general opinion of the six panelists is presented in Table 6 according to the following criteria: + (somewhat different); ++ (different); +++ (somewhat strong or sharp in sweetness); ++++ (strong or sharp in sweetness); +++++ (very strong or very sharp in sweetness).

**[Table 6]**

| Evaluation of taste and sharpness in sweetness | | | | | |
|---|---|---|---|---|---|
| Sample description | | | Comments on taste | Chocolate's taste | Sharpness of sweetness |
| Blank | | | | - | - |
| | + Yeast extract | | | | |
| (1) | Invention product | 0.05% | rich feel, body, milk feel, sweetness imparted | +++++ | +++ |
| (2) | Yeast Extract A | 0.05% | sweetness imparted | ++ | - |
| (3) | Yeast Extract B | 0.05% | somewhat sharp sweetness imparted | + | + |

| | + Major taste components | | | | |
|---|---|---|---|---|---|
| (4) | MSG | equivalent amount to 0.05% | *umami* and slight sweetness imparted | ++ | + |
| (5) | MSG+IG | equivalent amount to 0.05% | the above plus lingering aftertaste imparted | +++ | - |

| | + Water-soluble aroma components | | | | |
|---|---|---|---|---|---|
| (6) | Invention product | equivalent amount to 0.05% | | - | + |
| (7) | Yeast Extract A | equivalent amount to 0.05% | Flavor intensity: (6) > (7) > (8) | - | - |
| (8) | Yeast Extract B | equivalent amount to 0.05% | | - | - |

When taste components such as MSG and IG (the sum of sodium inosinate heptahydrate and sodium guanylate heptahydrate; unless otherwise noted, IG as referred to in other parts of the Examples has the same definition) were added to the blank, the chocolate's taste was particularly improved; in contrast, the addition of the yeast extracts improved the chocolate's taste in the order of B, A, and the invention product, demonstrating the particularly great effect of the invention product. In addition, the invention product was more effective than the respective taste components in imparting sharp sweetness.

On the other hand, the addition of the water-soluble aroma components had only a small effect on taste.

**[Table 7]**

| Evaluation of aroma and flavor | | | | |
|---|---|---|---|---|
| Sample description | | Comments on aroma and flavor | Chocolate aroma | Chocolate flavor |
| Blank | | | | - |
| | + Yeast extract | | | |
| (1) | Invention product | Sweet smell, with increased milk flavor | +++++ | +++++ |
| (2) | Yeast Extract A | Somewhat sweet and pleasant smell increased | ++ | ++ |
| (3) | Yeast Extract B | No difference from the blank | + | - |

| | + Major taste components | | | |
|---|---|---|---|---|
| (4) | MSG | - | - | - |
| (5) | MSG+IG | - | - | - |

| | + Water-soluble aroma components | | | |
|---|---|---|---|---|
| (6) | Invention product | Sweet smell, with increased milk flavor | ++++ | ++++ |
| (7) | Yeast Extract A | Somewhat sweet and pleasant smell increased | + | + |
| (8) | Yeast Extract B | No difference from the blank | - | - |

In the case of adding the aroma components, the aroma and chocolate flavor were obviously improved when the invention product was particularly added. As in the case of taste, the effectiveness of addition of the yeast extracts increased in the order of B, A, and the invention product. In addition, the addition of the water-soluble components of the invention product proved effective in increasing the aroma and chocolate's flavor, supporting that the water-soluble components are an important factor.

### 2. White chocolate

Samples of white chocolate were produced according to the recipes presented in the following table. The production method was in accordance with the case of milk chocolate production.

**[Table 8]**

| | | (1) | (2) | (3) | (4) | (5) | (6) | (7) | (8) | (9) | (10) | (11) | (12) |
|---|---|---|---|---|---|---|---|---|---|---|---|---|---|
| Ingredient | Blank (%) | Invention product (%) | Yeast Extract A (%) | Yeast Extract B (%) | MSG (%) | MSG+IG (%) | MSG+IG +pyrazines | MSG+IG +isovaleraldehyde | MSG+IG +furanmethanols | MSG+IG +pyrazines +isovaleraldehyde +furanmethanols | MSG+IG +pyrazines +furanmethanols | MSG+IG +pyrazines +isovaleraldehyde | MSG+IG +furanmethanols +isovaleraldehyde |
| *White chocolate | 97.50 | 97.50 | 97.50 | 97.50 | 97.50 | 97.50 | 97.50 | 97.50 | 97.50 | 97.50 | 97.50 | 97.50 | 97.50 |
| Salad oil | 2.50 | 2.45 | 2.45 | 2.45 | 2.49 | 2.49 | 2.49 | 2.49 | 2.49 | 2.49 | 2.49 | 2.49 | 2.49 |
| Invention product | | 0.05 | | | | | | | | | | | |
| Yeast Extract A | | | 0.05 | | | | | | | | | | |
| Yeast Extract B | | | | 0.05 | | | | | | | | | |
| MSG | | | | | 0.01 | 0.010 | 0.010 | 0.010 | 0.010 | 0.010 | 0.010 | 0.010 | 0.010 |
| IG | | | | | | 0.001 | 0.001 | 0.001 | 0.001 | 0.001 | 0.001 | 0.001 | 0.001 |
| Pyazines** | | | | | | | equivalent amount to 0.05% | | | equivalent amount to 0.05% | equivalent amount to 0.05% | equivalent amount to 0.05% | |
| Isovaleraldehyde | | | | | | | | equivalent amount to 0.05% | | equivalent amount to 0.05% | | equivalent amount to 0.05% | equivalent amount to 0.05% |
| Furanmethanols | | | | | | | | | equivalent amount to 0.05% | equivalent amount to 0.05% | equivalent amount to 0.05% | | equivalent amount to 0.05% |
| Total | 100.00 | 100.00 | 100.00 | 100.00 | 100.00 | 100.00 | 100.00 | 100.00 | 100.00 | 100.00 | 100.00 | 100.00 | 100.00 |

| | | | | | | | | | | | | | |
|---|---|---|---|---|---|---|---|---|---|---|---|---|---|
| *White chocolate Trade name: White Chocolate Manufactured and distributed by: Fuji Oil Co., Ltd. Ingredients: sugar, cocoa butter, whole milk powder, lecithin, flavorings **Pyrazines: A mixture of three pyrazines in the proportions equivalent to the invention Product (applicable in the other tables.) | | | | | | | | | | | | | |

### (Evaluation method)

Six trained panelists were asked to eat and evaluate the white chocolate blank (chocolate of Fuji Oil Co., Ltd.) together with the following test samples: (1) a group to which 0.05% of the invention product had been added; (2) a group to which 0.05% of Yeast Extract A had been added; (3) a group to which 0.05% Yeast Extract B had been added; (4) a group to which MSG equivalent to 0.05% of the invention product had been added (a group to which 0.001% MSG had been added); (5) a group to which MSG and IG equivalent to 0.05% of the invention product had been added (a group to which 0.001% MSG and 0.0001% IG had been added); (6) a group to which MSG, IG and pyrazines (a mixture of three pyrazines equivalent to 0.05% of the invention product) had been added in amounts equivalent to 0.05% of the invention product; (7) a group to which MSG, IG and isovaleraldehyde had been added in amounts equivalent to 0.05% of the invention product; (8) a group to which MSG, IG and furanmethanols (furanmethanols equivalent to 0.05% of the invention product) had been added in amounts equivalent to 0.05% of the invention product; (9) a group to which MSG, IG and pyrazines had been added in amounts equivalent to0.05% of the invention product; (10) a group to which MSG, IG, pyrazines and furanmethanols had been added in amounts equivalent to 0.05% of the invention product; (11) a group to which MSG, IG, pyrazines and isovaleraldehyde had been added in amounts equivalent to 0.05% of the invention product; and (12) a group to which MSG, IG, furanmethanols and isovaleraldehyde had been added in amounts equivalent to 0.05% of the invention product.

### (Criteria for evaluation)

The chocolate's taste, sharpness of sweetness, chocolate's aroma, chocolate's flavor, and milk flavor were evaluated and the results are set out below according to the same criteria as used in the case of milk chocolate.

**[Table 9]**

| Evaluation of taste and sharpness in sweetness | | | | | |
|---|---|---|---|---|---|
| | Sample description | | Comments | Chocolate taste | Sharpness of sweetness |
| | Blank | | | - | - |
| | Comparison with equivalent specifications of other companies | | | | |
| (1) | Invention product | 0.05% | rich feel, body, milk feel, and sweetness imparted condensed milk-like taste imparted | +++++ | ++++ |
| (2) | Yeast Extract A | 0.05% | sweetness imparted | ++ | - |
| (3) | Yeast Extract B | 0.05% | somewhat sharp sweetness imparted | ++ | + |

| | + Major taste components (equivalent amount to 0.05%) | | | | |
|---|---|---|---|---|---|
| (4) | MSG | | *umami* and slight sweetness imparted | ++ | + |
| (5) | MSG+IG | | the above plus lingering aftertaste imparted | +++ | - |

| | + Major taste componenst + major aroma components=(equivalent amount to 0.05%) | | | | |
|---|---|---|---|---|---|
| (6) | MSG + IG + pyrazines | | sweetness imparted, rich feel | +++ | ++ |
| (7) | MSG + IG + isovaleraldehyde | | milk feel, sweetness imparted | +++ | - |
| (8) | MSG + IG + furanmethanols | | sweetness imparted | ++ | ++ |
| (9) | MSG + IG + pyrazines + isovaleraldehyde + furanmethanols | | rich feel, milk feel, sweetness imparted | +++ | ++++ |
| (10) | MSG + IG + pyrazines + furanmethanols | | sweetness imparted, rich feel | +++ | +++ |
| (11) | MSG + IG + pyrazines + isovaleraldehyde | | rich feel, milk feel | +++ | + |
| (12) | MSG + IG + furanmethanols + isovaleraldehyde | | sweetness imparted | +++ | +++ |

In the case of white chocolate, too, taste components such as MSG and IG that were added to the blank imparted *umami,* slight sweetness and a lingering aftertaste, whereas the similarly added invention product imparted not only *umami,* slight sweetness and a lingering aftertaste but also rich feel, body, milk feel, sweetness and condensed milk-like feel. Since the latter effects were not obtained when only the taste components were added or when the water-soluble aroma components of the invention product were simply added to the taste components, contribution of some other factor was suggested.

**[Table 10]**

| Evaluation of aroma and flavor | | | | | | |
|---|---|---|---|---|---|---|
| | Sample description | | Comments | Chocolate' s aroma | Chocolate flavor | Milk flavor |
| | Blank | | | - | - | - |
| | + Yeast extract | | | | | |
| (1) | Invention product | 0.05% | milk flavor increased sweet smell, chocolate's smell increased | +++++ | +++++ | +++++ |
| (2) | Yeast Extract A | 0.05% | pleasant smell, enzyme's smell | + | + | - |
| (3) | Yeast Extract B | 0.05% | Difference from the blank hardly perceived | - | - | - |

| | + Major taste components (equivalent amount to 0.05%) | | | | | |
|---|---|---|---|---|---|---|
| (4) | MSG | | - | - | - | - |
| (5) | MSG+IG | | - | - | - | - |

| | + Major component + major aroma component (equivalent amount to 0.05%) | | | | | |
|---|---|---|---|---|---|---|
| (6) | MSG + IG + pyrazines | | pleasant smell imparted | ++ | ++ | - |
| (7) | MSG + IG + isovaleraldehyde | | sweet smell + milk flavor increased | ++ | ++ | +++ |
| (8) | MSG + IG + furanmethanols | | sweet smell increased | + | + | ++ |
| (9) | MSG + IG + pyrazines + isovaleraldehyde + furanmethanols | | milk flavor, chocolate's smell, sweet smell increased | ++++ | ++++ | ++++ |
| (10) | MSG + IG + pyrazines + furanmethanols | | sweet smell increased | +++ | +++ | +++ |
| (11) | MSG + IG + pyrazines + isovaleraldehyde | | sweet smell, milk flavor increased | +++ | +++ | ++++ |
| (12) | MSG + IG + furanmethanols + isovaleraldehyde | | milk flavor, chocolate's smell, sweet smell increased | ++ | ++ | ++++ |

In the evaluation of the elements associated with the aroma components, it became clear that although no effect was recognized by just adding taste components such as MSG and IG to the blank, adding the main aroma components of the invention product to these taste components proved effective. Compared with these cases, the addition of the invention product per se offered a stronger effect to improve various elements such as the milk feel, sweet smell, and the characteristic smell of chocolate ,

### 3. Chocolate drink

Samples of chocolate drink were produced according to the recipes presented in the following table.

**[Table 11]**

| | | (1) | (2) | (3) | (4) | (5) | (6) | (7) | (8) | (9) | (10) | (11) | (12) |
|---|---|---|---|---|---|---|---|---|---|---|---|---|---|
| Ingredient | Blank (%) | Invention product (%) | Yeast Extract A (%) | Yeast Extract B (%) | MSG (%) | MSG+IG (%) | MSG+IG +pyrazines | MSG+IG +isovaleraldehyde | MSG+IG +furanmethanols | MSG+IG +pyrazines +isovaleraldehyde +furanmethanols | MSG+IG +pyrazines +furanmethanols | MSG+IG +pyrazines +isovaleraldehyde | MSG+IG +furanmethanols +isovaleraldehyde |
| *Chocolate | 11.00 | 11.00 | 11.00 | 11.00 | 11.00 | 11.00 | 11.00 | 11.00 | 11.00 | 11.00 | 11.00 | 11.00 | 11.00 |
| Cow's milk | 44.50 | 44.50 | 44.50 | 44.50 | 44.50 | 44.50 | 44.50 | 44.50 | 44.50 | 44.50 | 44.50 | 44.50 | 44.50 |
| Water | 44.50 | 44.48 | 44.48 | 44.48 | 44.50 | 44.50 | 44.50 | 44.50 | 44.50 | 44.50 | 44.50 | 44.50 | 44.50 |
| Invention product | | 0.02 | | | | | | | | | | | |
| Yeast extract A | | | 0.02 | | | | | | | | | | |
| Yeast extract B | | | | 0.02 | | | | | | | | | |
| MSG | | | | | 0.004 | 0.004 | 0.004 | 0.004 | 0.004 | 0.004 | 0.004 | 0.004 | 0.004 |
| IG | | | | | | 0.0004 | 0.0004 | 0.0004 | 0.0004 | 0.0004 | 0.0004 | 0.0004 | 0.0004 |
| Pyrazines | | | | | | | equivalent amount to 0.02% | | | equivalent amount to 0.02% | equivalent amount to 0.02% | equivalent amount to 0.02% | |
| Isovaleraldehyde | | | | | | | | equivalent amount to 0.02% | | equivalent amount to 0.02% | | equivalent amount to 0.02% | equivalent amount to 0.02% |
| Furanmethanols | | | | | | | | | equivalent amount to 0.02% | equivalent amount to 0.02% | equivalent amount to 0.02% | | equivalent amount to 0.02% |
| Total | 100.00 | 100.00 | 100.00 | 100.00 | 100.00 | 100.00 | 100.00 | 100.00 | 100.00 | 100.00 | 100.00 | 100.00 | 100.00 |

| | | | | | | | | | | | | | |
|---|---|---|---|---|---|---|---|---|---|---|---|---|---|
| *Chocolate Trade name: Superior Cacao 75% Manufactured by: DAITO CACAO CO., LTD. Ingredients: cacao mass, sugar, cocoa butter, emulsifiers | | | | | | | | | | | | | |

### (Production process)

To chopped chocolate, samples such as yeast extracts were added and after adding warmed cow's milk and hot water in the prescribed amounts, the mixtures were stirred until the chocolate melted.

### (Method of evaluation and criteria for evaluation)

The items evaluated were chocolate's taste, chocolate'a aroma, cacao feel, and chocolate flavor, and the results of evaluation are presented below according to the same criteria as used in the case of milk chocolate.

**[Table 12]**

| Evaluation of taste | | | | |
|---|---|---|---|---|
| | Sample description | | Comments | Chocolate's taste |
| | Blank | | | - |
| | +Yeast extract | | | |
| (1) | Invention product | 0.02% | bitter feel and cacao feel imparted, in addition to milk feel | +++++ |
| (2) | Yeast Extract A | 0.02% | somewhat bitter taste perceived | + |
| (3) | Yeast Extract B | 0.02% | bitter feel imparted | ++ |

| | + Major taste components (equivalent amount to 0.02%) | | | |
|---|---|---|---|---|
| (4) | MSG | | sweetness imparted but hardly different from the blank | ++ |
| (5) | MSG+IG | | same as above | +++ |

| | + Major taste components +major aroma components (equivalent amount to 0.02%) | | | |
|---|---|---|---|---|
| (6) | MSG+IG+pyrazines | | bitter feel imparted, generally satisfactory sharpness in taste | +++ |
| (7) | MSG+IG+isovaleraldehyde | | bitter feel + milk feel imparted | +++ |
| (8) | MSG+IG+furanmethanols | | sweetness imparted | +++ |
| (9) | MSG+IG+pyrazines +isovaleraldehyde +furanmethanols | | slight sweetness and milk feel imparted to bitter feel | +++ |
| (10) | MSG+IG +pyrazines+furanmethanols | | slight sweetness imparted to bitter feel | +++ |
| (11) | MSG+IG+pyrazines +isovaleric aldehyde | | slight milk feel imparted to bitter feel | +++ |
| (12) | MSG+IG+furanmethanols +isovaleraldehyde | | sweetness, milk feel | +++ |

**[Table 13]**

| Evaluation of aroma and flavor | | | | | | |
|---|---|---|---|---|---|---|
| | Sample description | | Comments | Chocolat e's aroma | Cacao feel | Chocolate flavor |
| | Blank | | | - | - | - |
| | + Yeast extract | | | | | |
| (1) | Invention product | 0.02% | cacao flavor, chocolate flavor, milk flavor increased | +++++ | +++++ | +++++ |
| (2) | Yeast extract A | 0.02% | sweet smell increased | + | + | + |
| (3) | Yeast extract B | 0.02% | cacao flavor increased | ++ | ++ | ++ |

| | + Major taste components (equivalent amount to 0.02%) | | | | | |
|---|---|---|---|---|---|---|
| (4) | MSG | | - | - | - | - |
| (5) | MSG+IG | | - | - | - | - |

| | + Major taste components + major aroma components (equivalent amount to 0.02%) | | | | | |
|---|---|---|---|---|---|---|
| (6) | MSG+IG+pyrazines | | high-quality bitter chocolate flavor increased | ++ | ++ | ++ |
| (7) | MSG+IG +isovaleraldehyde | | milk flavor increased | ++ | + | ++ |
| (8) | MSG+IG+furanmethanols | | sweet smell somewhat increased | + | + | + |
| (9) | MSG+IG+pyrazines +isovaleraldehyde +furanmethanols | | well-balanced smell, with increased chocolate feel and premium feel | ++++ | ++++ | ++++ |
| (10) | MSG+IG+pyrazines +furanmethanols | | bitter feel + milk flavor somewhat increased | ++ | ++ | ++ |
| (11) | MSG+IG+pyrazines +isovaleraldehyde | | bitter feel + sweet smell somewhat increased | ++ | ++ | ++ |
| (12) | MSG+IG+furanmethanols +isovaleraldehyde | | somewhat sweet, milk feel increased | ++ | ++ | ++ |

### [Example 3]

### [Study 1 on the amount of incorporation in chocolate products]

Optimum amounts for addition of yeast extracts were studied. Samples of white chocolate and milk chocolate were produced by the methods already described above. HIMAX GL as the invention product and VERTEX IG 20 were added in amounts of 0.1% to 0.02% to investigate optimum amounts of addition.

**[Table 14]**

| Formulation for white chocolate | | | |
|---|---|---|---|
| Ingredient | Blank (%) | Invention product (%) | Yeast Extracts D (%) |
| *White chocolate | 97.50 | 97.50 | 97.50 |
| Salad oil | 2.50 | 2.4∼2.48 | 2.4∼2.48 |
| Invention product | | 0.1∼0.02 | |
| Yeast Extract D | | | 0.1∼0.02 |
| Total | 100.00 | 100.00 | 100.00 |

**[Table 15]**

| Formulation for milk chocolate | | | |
|---|---|---|---|
| Ingredient | Blank (%) | Invention product (%) | Yeast Extract D (%) |
| *Milk chocolate (Cacao 36) | 97.50 | 97.50 | 97.50 |
| Salad oil | 2.50 | 2.4∼2.48 | 2.4∼2.48 |
| Invention product | | 0.1∼0.02 | |
| Yeast Extract D | | | 0.1∼0.02 |
| Total | 100.00 | 100.00 | 100.00 |

In both the white chocolate and milk chocolate, an optimum amount of addition was 0.05% for the invention product and 0.02% for Yeast Extract D. The differences between the invention product and Yeast Extract D in terms of the effect of addition are shown in the following table.

**[Table 16]**

| Evaluation of white chocolate | | | | | | | | |
|---|---|---|---|---|---|---|---|---|
| Sample description | | | Sensory evaluation of taste | Chocolate's taste | Sharpness of sweetness | Sensory evaluation of aroma | Chocolate' s aroma | Chocolate flavor |
| Blank | | | | - | - | | - | - |
| (1) | Invention product | 0.05% | rich feel, sweetness strengthened, milk's taste enhanced | +++++ | +++ | condensed milk-like flavor increased, sweet smell enhanced | +++++ | +++++ |
| (2) | Yeast Extract D | 0.02% | sweetness imparted and body of aftertaste enhanced | +++ | + | milk flavor imparted | ++ | +++ |

**[Table 17]**

| Evaluation of milk chocolate | | | | | | | | |
|---|---|---|---|---|---|---|---|---|
| Sample description | | | Sensory evaluation of taste | Chocolate's taste | Sharpness of sweetness | Sensory evaluation of aroma | Chocolate' s aroma | Chocolate flavor |
| Blank | | | | - | - | | - | - |
| (1) | Invention product | 0.05% | chocolate's rich feel, sweetness enhanced | +++++ | +++ | pleasant smell like top note and sweet smell enhanced | +++++ | +++++ |
| (2) | Yeast Extract D | 0.02% | sweetness imparted and body of aftertaste enhanced | +++ | + | milk flavor imparted | ++ | +++ |

### [Example 4]

### [Study 2 on the amount of incorporation in chocolate products]

The effective ranges of the amounts of yeast extracts to be added to chocolate produces were studied. Milk chocolate, white chocolate and chocolate drink that had the invention product added in amounts of 0.0005% to 0.5% were produced by the above-described methods and evaluated. The results are shown in the following table.

**[Table 18]**

| Overall evaluation of the taste of chocolate products | | | | | | | | | | | |
|---|---|---|---|---|---|---|---|---|---|---|---|
| | 0.0005 | 0.001 | 0.002 | 0.005 | 0.01 | 0.05 | 0.1 | 0.15 | 0.3 | 0.5 | 0.6 |
| Milk chocolate | - | + | ++ | +++ | ++++ | +++++ | +++++ | +++++ | +++ | ++ | - |
| White chocolate | - | + | ++ | +++ | ++++ | +++++ | +++++ | +++++ | +++ | - | - |
| Chocolate drink | - | + | +++ | +++++ | +++++ | +++++ | +++ | + | - | - | - |

| | | | | | | | | | | | |
|---|---|---|---|---|---|---|---|---|---|---|---|
| In comparison with the blank which was evaluated (-), a general opinion of six panelists is presented in the table according to the following criteria: + (somewhat different); ++ (different); +++ (chocolate's taste somewhat strong or sweetness somewhat sharp); ++++ (chocolate's taste strong or sweetness sharp); +++++ (chocolate's taste very strong or sweetness very sharp). | | | | | | | | | | | |

**[Table 19]**

| Overall evaluation of the aroma/flavor of chocolate products | | | | | | | | | | | |
|---|---|---|---|---|---|---|---|---|---|---|---|
| | 0.0005 | 0.001 | 0.002 | 0.005 | 0.01 | 0.05 | 0.1 | 0.15 | 0.3 | 0.5 | 0.6 |
| Milk chocolate | - | + | ++ | +++ | ++++ | +++++ | +++++ | +++++ | ++ | + | - |
| White chocolate | - | + | ++ | +++ | ++++ | +++++ | +++++ | ++++ | ++ | - | - |
| Chocolate drink | - | + | +++ | +++++ | +++++ | +++++ | +++ | + | - | - | - |

| | | | | | | | | | | | |
|---|---|---|---|---|---|---|---|---|---|---|---|
| In comparison with the blank which was evaluated (-), a general opinion of six panelists is presented in the table according to the following criteria: + (somewhat different); ++ (different); +++ (chocolate's aroma/flavor somewhat strong); ++++ (chocolate's aroma/flavor strong); +++++ (chocolate's aroma/flavor very strong). | | | | | | | | | | | |

The effective ranges for the amount of the invention product to be added to various types of chocolate products were studied for evaluation of the taste and the sharpness of sweetness that were primarily perceived in the mouth as well as for evaluation of the aroma and flavor that were primarily perceived in the nose. For milk chocolate, it was found that the effective amount was at least 0.001%, preferably at least 0.005%, more preferably at least 0.01%, and in all conceivable cases, the effective amount was not more than 0.5%, preferably not more than 0.3%, and more preferably not more than 0.2%. For white chocolate, it was found that the effective amount was at least 0.001%, preferably at least 0.005%, more preferably at least 0.01%, and in all conceivable cases, the effective amount was not more than 0.4%, preferably not more than 0.3%, and more preferably not more than 0.2%. For chocolate drink, the effective amount was at least 0.001%, preferably at least 0.002%, more preferably at least 0.003%, and in all conceivable cases, the effective amount was not more than 0.15%, preferably not more than 0.13%, and more preferably not more than 0.075%.

The effective amount of the invention product that was common to all chocolate products was at least 0.001%, preferably at least 0.01%, and in all conceivable cases, the effective amount was preferably not more than 0.2%, and more preferably not more than 0.075%. The upper limit of the effective amount was so determined as to avoid deleterious effects on taste (*umami* was too strong, or the characteristic taste of the yeast extract was perceived) and aroma/flavor (the characteristic aroma of the yeast extract was unpleasant.)

Using samples of chocolate drink, the effective ranges for the respective components of the invention product were calculated.

**[Table 20]**

| | Content in the yeast extract | Lower limit | | | Upper limit | |
|---|---|---|---|---|---|---|
| | | in GL | ppm in GL | | in GL | ppm in GL |
| Mixture of three (1) pyrazines eq. to | 1.2 ppm | 0.0006000 (%)eq. to | 0.0007200 | | 0.75 (%)eq. to | 0.90 |
| (2) 3-methyl-butanal | 74.37 ppm | 0.0000625 (%) | 0.0046481 | | 0.80 (%) | 59.50 |
| (3) Franmethanols | 6.13 ppm | 0.0002500 (%) | 0.0015325 | | 0.50 (%) | 3.07 |
| (4) (1)+(2)+(3) | 81.7 ppm | 0.0000025 (%) | 0.0002043 | | 0.40 (%) | 32.68 |
| (5) MSG | 20 % | 0.0033000 (%) | 0.06 | | 0.30 (%) | 6.0 (%) |
| | | | 6 | | | |
| (6) MSG+IG | 20+2 % | 0.0008300 (%) | 0.01 | + 0.002 | 0.10 (%) | 2.0 0.2 (%) |
| | | | 7 | | | |

### [Example 5]

### [Confirmation of the effect of 5-methyl-2-furanmethanol]

With a commercial product of 5-methyl-2-furanmethanol being used as a standard sample, the concentration of 5-methyl-2-furanmethanol in the invention product (averaged for three lots) was determined by the same method that was described in Example 1. As it turned out, the concentration of 5-methyl-2-furanmethano was 16.73 ppm.

### 2. White chocolate

Samples of white chocolate were produced according to the recipes shown in the following table. The production method was in accordance with Example 2. The 5-methyl-2-furanmethanol used was a commercial product (unless otherwise noted, this will hereinafter apply to Example 5.)

**[Table 21]**

| (%) | | | | | | |
|---|---|---|---|---|---|---|
| | | (13) | (14) | (15) | (16) | (17) |
| | Blank | MSG+IG | MSG+IG | MSG+IG | MSG+IG | MSG+IG |
| Ingredient | | +d | +a+b +c+d | +b +c+d | +a +c+d | +a+b +d |
| *White chocolate | 97.50 | 97.50 | 97.50 | 97.50 | 97.50 | 97.50 |
| Salad oil | 2.50 | 2.49 | 2.49 | 2.49 | 2.49 | 2.49 |
| Invention product | | | | | | |
| Yeast Extract A | | | | | | |
| Yeast Extract B | | | | | | |
| MSG | | 0.010 | 0.010 | 0.010 | 0.010 | 0.010 |
| IG | | 0.001 | 0.001 | 0.001 | 0.001 | 0.001 |
| a. Pyrazines | | | equivalent amount to 0.05% | | equivalent amount to 0.05% | equivalent amount to 0.05% |
| b. Isovaleraldehyde | | | equivalent amount to 0.05% | equivalent amount to 0.05% | | equivalent amount to 0.05% |
| c. 2-furanmethanol | | | equivalent amount to 0.05% | equivalent amount to 0.05% | equivalent amount to 0.05% | |
| d. 5-Methyl-2-furanmethanol | | equivalent amount to 0.05% | equivalent amount to 0.05% | equivalent amount to 0.05% | equivalent amount to 0.05% | equivalent amount to 0.05% |
| Total | 100.00 | 100.00 | 100.00 | 100.00 | 100.00 | 100.00 |

Six Trained panelists were asked to eat and evaluate the thus produced samples of white chocolate as in Example 2.

### (Criteria for evaluation)

The chocolate's taste, sharpness of sweetness, chocolate's aroma, chocolate's flavor, and milk flavor were evaluated and the results are set out below according to the same criteria that were used in Example 2.

**[Table 22]**

| Evaluation of taste and sharpness in sweetness | | | | |
|---|---|---|---|---|
| | Sample description | Sensory evaluation of taste | Chocolate's taste | Sharpness of sweetness |
| | Blank | | - | - |
| + Major taste components + major aroma components (equivalent amount to 0.05%) | | | | |
| (13) | MSG + IG + 5-methyl-2-furanmethanol | sharp sweetness imparted | +++ | +++ |
| (14) | MSG + IG + pyrazines + isovaleraldehyde + 2-furanmethanol + 5-methyl-2-furanmethanol | rich feel, milk feel, sweetness imparted | ++++ | ++++ |
| (15) | MSG + IG + isovaleraldehyde + 2-furanmethanol + 5-methyl**-**2-furanmethanol | sweetness, milk feel imparted, rich feel | +++ | +++ |
| (16) | MSG + IG + pyrazines + 2-furanmethanol + 5-methyl-2-furanmethanol | sweetness imparted, rich feel | +++ | +++ |
| (17) | MSG + IG + pyrazines + isovaleraldehyde + 5-methyl-2-furanmethanol | sweetness imparted, rich feel | +++ | +++ |

**[Table 23]**

| Evaluation of aroma/flavor | | | | | |
|---|---|---|---|---|---|
| | Sample description | Sensory evaluation of aroma (flavor) | Chocolate's aroma | Chocolate flavor | Milk flavor |
| | Blank | | - | - | - |
| | + Major taste components + major aroma components (equivalent amount to 0.05%) | | | | |
| (13) | MSG + IG + 5-methyl-2- furanmethanol | somewhat bitter smell | +++ | +++ | + |
| (14) | MSG + IG + pyrazines + isovaleraldehyde + 2-furanmethanol + 5-methyl-2- furanmethanol | milk flavor, chocolate's smell, sweet smell increased | ++++ | ++++ | ++++ |
| (15) | MSG + IG + isovaleraldehyde + 2-furanmethanol + 5-methyl-2-furanmethnaol | sweet smell, milk flavor increased | +++ | +++ | +++ |
| (16) | MSG + IG + pyrazines + 2-furanmethanol + 5-methyl-2-furanmethanol | sweet smell, chocolate's smell increased | +++ | +++ | +++ |
| (17) | MSG + IG + pyrazines + isovaleraldehyde + 5-methyl-2-furanmethanol | sweet smell, chocolate's smell increased | +++ | +++ | +++ |

When the taste components MSG and IG as well as 5-methyl-2-furanmethanol were added to the blank, the bitter flavor of cacao was increased. While 2-furanmethanol imparted a sweet smell, 5-methyl-2-furanmethanol provided a different effect when added. It was also clear that particularly high effects were obtained by adding all of the main aroma components of the invention product (i.e., pyrazines, isovaleraldehyde, 2-furanmethanol, and 5-methyl-2-furanmethanol) to the taste components. However, this was still inferior to the case of adding the invention product per se, which provided the greatest effects in improving milk feel, sweet smell, the characteristic smell of chocolate, etc.

### 3. Chocolate drink

Samples of chocolate drink were produced according to the recipes shown in the following table. The production method was in accordance with Example 2.

**[Table 24]**

| (%) | | | | | | |
|---|---|---|---|---|---|---|
| | | (13) | (14) | (15) | (16) | (17) |
| Ingredient | Blank | MSG+IG | MSG+IG | MSG+IG | MSG+IG | MSG+IG |
| | | +d | +a+b +c+d | +b +c+d | +a +c+d | +a+b +d |
| *Chocolate (Cacao 75) | 11.00 | 11.00 | 11.00 | 11.00 | 11.00 | 11.00 |
| Cow's milk | 44.50 | 44.50 | 44.50 | 44.50 | 44.50 | 44.50 |
| Water | 44.50 | 44.50 | 44.50 | 44.50 | 44.50 | 44.50 |
| Invention product | | | | | | |
| Yeast Extract A | | | | | | |
| Yeast Extract B | | | | | | |
| MSG | | 0.004 | 0.004 | 0.004 | 0.004 | 0.004 |
| IG | | 0.0004 | 0.0004 | 0.0004 | 0.0004 | 0.0004 |
| a. Pyrazines | | | equivalent amount to 0.02% | | equivalent amount to 0.02% | equivalent amount to 0.02% |
| b. Isovaleraldehyde | | | equivalent amount to 0.02% | equivalent amount to 0.02% | | equivalent amount to 0.02% |
| c. 2-furanmethanol | | | equivalent amount to 0.02% | equivalent amount to 0.02% | equivalent amount to 0.02% | |
| d. 5-Methyl-2-furanmethanol | | equivalent amount to 0.02% | equivalent amount to 0.02% | equivalent amount to 0.02% | equivalent amount to 0.02% | equivalent amount to 0.02% |
| Total | 100.00 | 100.00 | 100.00 | 100.00 | 100.00 | 100.00 |

Six trained panelists were asked to eat and evaluate the thus produced samples of chocolate drink as in Example 2.

### (Criteria for evaluation)

The chocolate's taste, chocolate's aroma, cacao feel, and chocolate flavor were evaluated and the results are presentedt below according to the same criteria as used in Example 2.

**[Table 25]**

| Evaluation of taste | | | |
|---|---|---|---|
| | Sample description | Sensory evaluation of taste | Chocolate's taste |
| | Blank | | - |
| | + Major taste components + major aroma components (equivalent amount to 0.02%) | | |
| (13) | MSG + IG + 5-methyl-2-furanmethanol | bitter feel and cacao feel imparted | +++ |
| (14) | MSG + IG + pyrazines + isovaleraldehyde + 2-furanmethanol + 5-methyl-2-furanmethanol | rich feel, milk feel, sweetness, cacao feel imparted | ++++ |
| (15) | MSG + IG + isovaleraldehyde + 2-furanmethanol + 5-methyl-2- furanmethanol | cacao feel, slight sweetness, milk feel imparted | +++ |
| (16) | MSG + IG + pyrazines + 2-furanmethanol + 5-methyl-2- furanmethanol | cacao feel, sweetness, milk feel imparted | +++ |
| (17) | MSG + IG + pyrazines + isovaleraldehyde + 5-methyl-2- furanmethanol | sweetness imparted, milk feel, rich feel | +++ |

**[Table 26]**

| Evaluation of aroma/flavor | | | | | |
|---|---|---|---|---|---|
| | Sample description | Sensory evaluation of aroma (flavor) | Chocolate's aroma | Cacao feel | Chocolate flavor |
| | Blank | | - | - | - |
| | + Major taste components + major aroma components (equivalent amount to 0.02%) | | | | |
| (13) | MSG + IG + 5-methyl-2-furanmethanol | cacao's smell, bitter smell increased | +++ | ++++ | +++ |
| (14) | MSG + IG + pyrazines + isovaleraldehyde + 2-furanmethanol + 5-methyl-2-furanmethanol | milk flavor, chocolate's smell, sweet smell increased | ++++ | ++++ | ++++ |
| (15) | MSG + IG + isovaleraldehyde + 2-furanmethanol + 5-methyl-2-furanmethnaol | cacao feel, sweet smell, milk flavor increased | +++ | +++ | +++ |
| (16) | MSG + IG + pyrazines + 2-furanmethanol + 5-methyl-2-furanmethanol | cacao feel, sweet smell, chocolate's smell increased | +++ | +++ | +++ |
| (17) | MSG + IG + pyrazines + isovaleraldehyde + 5-methyl-2-furanmethanol | cacao feel, sweet smell, milk flavor increased | +++ | +++ | +++ |

When the taste components MSG and IG as well as 5-methyl-2-furanmethanol were added to the blank, bitter feel and cacao feel were increased in the evaluation of taste and aroma/flavor. While 2-furanmethanol imparted a sweet smell, 5-methyl-2-furanmethanol provided a different effect when added. It was also clear that particularly high effects were obtained by adding all of the main aroma components of the invention product (i.e., pyrazines, isovaleraldehyde, 2-furanmethanol, and 5-methyl-2-furanmethanol) to the taste components. However, this was still inferior to the case of adding the invention product per se, which provided the greatest effects in improving milk feel, sweet smell, the characteristic smell of chocolate, etc.

### 4. Study on the amount of incorporation in chocolate products

Using samples of chocolate drink, an additional study was made to know the effective ranges for the respective components of the invention product as in Example 4.

**[Table 27]**

| | | ppm in GL | Lower limit | | | Upper limit | | |
|---|---|---|---|---|---|---|---|---|
| | | | in GL | | ppm in GL | in GL | | ppm in GL |
| (7) | 5-methyl-2-furanmethnaol | 16..73 | 0.000050 0 | (%) eq. to | 0.000837 0 | 1 | (%)eq. to | 16.73 |
| (8) | pyrazines, isovaleraldehyde, 2-furanmethanol, 5-methyl-2-furanmethanol | 98.44 | 0.000001 | (%) | 0.000098 4 | 0.75 | (%) | 73.83 |

## Claims

1. A method of improving the eating quality of chocolate products, which comprises the step of adding a yeast extract comprising:
(a) at least 10 wt%, preferably at least 15%, of sodium glutamate;
(b) at least 1 wt%, preferably at least 1.5 wt%, in total of sodium inosinate and sodium guanylate; and
(c) 2-furanmethanol and/or 5-methyl-2-furanmethanol.

2. The method according to claim 1, wherein the yeast extract is added in an amount of at least 0.002%, preferably at least 0.01%, but not more than 0.13%, preferably not more than 0.075%, per unit weight of the product.

3. A chocolate product comprising (1) cacao, (2) milk fat, (3) a sweetener, and (4) a yeast extract comprising:
(a) at least 10 wt%, preferably at least 15%, of sodium glutamate;
(b) at least 1 wt%, preferably at least 1.5 wt%, in total of sodium inosinate and sodium guanylate; and
(c) 2-furanmethanol and/or 5-methyl-2-furanmethanol,
further **characterized in that** the product contains
(a) at least 0.00010 wt% of sodium glutamate; and
(b) at least 0.000010 wt% in total of sodium inosinate and sodium guanylate.

4. The chocolate product according to claim 3 which is milk chocolate containing at least 21 wt% of cacao.

5. The chocolate product according to claim 3 which is white chocolate containing at least 18 wt% of cocoa butter.

6. The chocolate product according to claim 3 which is a chocolate drink containing at least 7 wt% of cacao.

## Patentansprüche

1. Verfahren zur Verbesserung der Essqualität von Schokoladenprodukten, umfassend den Schritt der Zugabe eines Hefeextrakts, umfassend:
(a) zumindest 10 Gew.-%, bevorzugt zumindest 15 %, an Natriumglutamat;
(b) zumindest 1 Gew.-%, bevorzugt zumindest 1,5 Gew.-%, insgesamt an Natriuminosinat und Natriumguanylat und
(c) 2-Furanmethanol und/oder 5-Methyl-2-furanmethanol.

2. Verfahren nach Anspruch 1, wobei der Hefeextrakt in einer Menge von zumindest 0,002 %, bevorzugt zumindest 0,01%, jedoch nicht mehr als 0.13 %, bevorzugt nicht mehr als 0,075 % pro Gewichtseinheit des Produkts zugegeben wird.

3. Schokoladenprodukt, umfassend (1) Kakao, (2) Milchfett, (3) ein Süßungsmittel, und (4) einen Hefeextrakt, umfassend:
(a) zumindest 10 Gew.-%, bevorzugt zumindest 15 %, an Natriumglutamat;
(b) insgesamt zumindest 1 Gew.-%, bevorzugt zumindest 1,5 Gew.-%, an Natriuminosinat und Natriumguanylat und
(c) 2-Furanmethanol und/oder 5-Methyl-2-furanmethanol,
weiter **dadurch gekennzeichnet, dass** das Produkt enthält:
(a) insgesamt zumindest 0,00010 Gew.-% an Natriumglutamat; und
(b) insgesamt zumindest 0,000010 Gew.-% an Natriuminosinat und Natriumguanylat.

4. Schokoladenprodukt nach Anspruch 3, wobei das Schokoladenprodukt Milchschokolade ist, welche zumindest 21 Gew.-% an Kakao enthält.

5. Schokoladenprodukt nach Anspruch 3, wobei das Schokoladenprodukt weiße Schokolade ist, welche zumindest 18 Gew.-% an Kakaobutter enthält.

6. Schokoladenprodukt nach Anspruch 3, wobei das Schokoladenprodukt ein Schokoladengetränk ist, welches zumindest 7 Gew.-% an Kakao enthält.

## Revendications

1. Procédé d'amélioration de la qualité gustative de produits à base de chocolat, qui comprend l'étape d'ajout d'un extrait de levure comprenant :
(a) au moins 10 % en poids, de préférence, au moins 15 %, de glutamate de sodium ;
(b) au moins 1 % en poids, de préférence, au moins 1,5 % en poids, de la totalité entre de l'inosinate de sodium et du guanylate de sodium ; et
(c) du 2-furylméthanol et/ou du (5-méthyl-2-furyl)méthanol.

2. Procédé selon la revendication 1, dans lequel l'extrait de levure est ajouté dans une quantité d'au moins 0,002 %, d'au moins 0,01 % de préférence, mais pas à plus de 0,13 %, de préférence pas à plus ce 0,075 %, par unité de poids du produit.

3. Produit à base de chocolat comprenant (1) du cacao, (2) de la matière grasse de lait, (3) un édulcorant, et (4) un extrait de levure comprenant :
(a) au moins 10 % en poids, de préférence, au moins 15%, de glutamate de sodium ;
(b) au moins 1% en poids, de préférence, au moins 1,5 % en poids, de la totalité entre de l'inosinate de sodium et du guanylate de sodium ; et
(c) du 2-furylméthanol et/ou du (5-méthyl-2-furyl)méthanol,
**caractérisé en outre en ce que** le produit contient
(a) au moins 0,00010 % en poids de glutamate de sodium ; et
(b) au moins 0,000010 % en poids de la totalité entre de l'inosinate de sodium et du guanylate de sodium.

4. Produit à base de chocolat selon la revendication 3, qui est du chocolat au lait contenant au moins 21 % en poids de cacao.

5. Produit à base de chocolat selon la revendication 3, qui est du chocolat blanc contenant au moins 18 % en poids de beurre de cacao.

6. Produit à base de chocolat selon la revendication 3, qui est une boisson chocolatée contenant au moins 7 % en poids de cacao.
